# EUROPEAN PATENT SPECIFICATION

(11) **EP 0 419 080 B1**
(45) Date of publication and mention of the grant of the patent: **18.11.1993**
(21) Application number: 90309612.1
(22) Date of filing: 03.09.1990
(51) Int. Cl.: A23L 1/318, A23B 4/28

(54) **Cold particle suspension and injection process for meat**
Kalte Partikel-Suspension und Injektions-Verfahren für Fleisch
Suspension de particules froide et procédé d'injection pour la viande

(30) Priority: 20.09.1989 US 410100
(43) Date of publication of application: 27.03.1991
(73) Proprietor: COZZINI, INC., Chicago, Illinois 60646-0489 (US)
(72) Inventor: Cozzini, Ivo, Lincolnwood, Illinois 60646 (US); Walker, Matthew, Marietta, Georgia 30066 (US)
(74) Representative: Wain, Christopher Paul

(56) References cited:
- EP-A- 0 284 269
- WO-A-84/00283
- US-A- 4 402 987

## Description

The present invention relates to a method of treating raw meat to increase its green weight.

Various processes are known for increasing the green weight of meat and are described, for example, in U.S. patents 3,215,534, 3,835,223, 3,989,851, 4,402,987 and RE 30,023. WO-A-84/00283 describes a process for treating meat which comprises injecting into the meat ground trim of the same type of meat, the injectable sometimes also including water and/or pickling agents.

We have now devised a new way of treating meat to increase its green weight whereby the water value of the meat can be increased and the marbling of lean meat improved.

According to the present invention, there is provided a method of treating meat, which comprises injecting into the meat ground trim of the same type of meat: characterised in that the ground trim is suspended in brine; the temperature of the meat is from 3°C to 9°C when the suspension, which is cooler than the meat, is injected therein; and the suspension is prepared by
a) removing trim from meat of the same type as the meat to be treated, said trim consisting of fat and lean meat;
b) freezing said trim;
c) grinding said frozen trim in a grinding apparatus;
d) cooling a brine solution to between approximately -9°C and -6°C;
e) blending said ground frozen trim and said brine solution together at a ratio wherein the amount of brine is at least double the amount of trim by weight and maintaining the temperature of said blend at between approximately -9°C and -4°C.
f) mixing said trim and brine solution until a saturated solution is achieved; and
g) milling said saturated solution until a complete suspension is achieved, having a temperature of 0°C or less;

and wherein said suspension is then injected into the meat.

In the method of the present invention, trim suspended in a cold brine solution is injected into a warmer meat mass. In one preferred procedure, the trim is first removed from like meat, the trim consisting of fat and lean meat, and then it is frozen and ground and maintained at a temperature of between about -8°C and -4°C (18°F and 24°F). The ground trim is then blended with a brine solution which has been cooled to between about -9°C and -6°C (16°F and 20°F). The brine and trim blend is mixed to form a saturated solution and then milled into a suspension with a temperature of 0°C (32°F) or less. The suspension is injected into the meat muscle which is at a temperature between 3°C and 9°C (38°F and 48°F).

The method of the invention may be used on all types of meat, including beef, pork, poultry, lamb and fish. The meat muscle to be treated is first prepared in the industry's standard manner, that is, it is deboned and has the trim removed. If trim is unavailable from the meat to be treated, trim from a like meat may be used. Trim for purposes of the present invention includes fat and some muscle tissue. Trim from the original meat muscle, a like meat muscle or reworked, denatured muscle is frozen to approximately -8°C (18°F). Trim values generally vary from between 50% lean and 50% fat to 90% lean and 10% fat. The frozen trim is ground by a grinding apparatus to a particle size of between approximately 6mm and 1.5mm (3/8 and 1/16 inch). The ground trim is kept generally between -8°C and -4°C (18°F and 24°F) depending on the type of meat into which it is to be injected. For example, in the method of the present invention, it has been found that trim from ham should preferably be chilled to between -8°C and -5°C (18°F and 22°F), trim from poultry should preferably be chilled to between -8°C and -4°C (18°F and 24°F) and trim from beef chilled to between -7.8°C and -6.7°C (18°F and 20°F).

A solution of brine is cooled to approximately -8°C (18°F). Pickle, i.e. seasonings, nitrates, phosphates, binders, etc., may be added to the brine to act as flavour enhancers and meat preservatives. The temperature of the brine and pickle solution may vary slightly depending on the meat into which the solution will be injected. For example, for ham and for beef the brine solution is generally cooled to between -7.8°C to -6.7°C (18°F and 20°F), and for poultry it is generally cooled to between -8.9°C and -7.8°C (16°F and 18°F).

The ground trim and the brine and pickle solution are preferably blended together in a first hopper at a predetermined ratio, generally 2, 3 or 4 parts of brine by weight to one part of trim. The trim and brine solution are mixed, preferably by hand, until saturation takes place. The blend is then force fed through a mill which is commercially available from Cozzini, Inc. of Chicago, Illinois under the trademark AR-901, and then fed into a second hopper. The blend is then allowed to flow back into the first hopper at the same rate of flow as it was fed into the second hopper. This process is continued until a temperature of about 0°C (32°F) is reached, the preferred temperature being -2°C (28°F), or until a maximum of two minutes of reduction has occurred. At that point, a complete suspension is achieved.

The suspension is then injected under low pressure via hollow needles into the meat muscle of the meat being treated. The temperature of the meat at the time of injection should be between 3°C and 7°C (38°F and 44°F), but in no case higher than 9°C (48°F). Injecting cold suspension (-2°C to 0°C; 28°F to 32°F) into relatively warm meat (3°C to 6°C; 38°F to 43°F) permits faster, more even and deeper penetration of the suspension throughout the meat muscle, because the suspension does not block, clot or gel. This means that the tumble or massage time can be greatly reduced. After injection, standard massaging, as open massage, open tumble or vacuum tumble, may be performed to ensure thorough dispersion of the suspension throughout the meat muscle.

By the above-described method, a 3% to 8% increase in green weight of the untreated product can be obtained with substantially no flavour loss and with the suspension not visible in the inspected meat product.

Thus, the present invention provides a method of increasing the green weight of meat via a cold particle suspension of trim and brine solution which is injected into the meat muscle with no flavour loss.

## Claims

1. A method of treating meat, which comprises injecting into the meat ground trim of the same type of meat: characterised in that the ground trim is suspended in brine; the temperature of the meat is from 3°C to 9°C when the suspension. which is cooler than the meat, is injected therein; and the suspension is prepared by
a) removing trim from meat of the same type as the meat to be treated, said trim consisting of fat and lean meat;
b) freezing said trim;
c) grinding said frozen trim in a grinding apparatus;
d) cooling a brine solution to between -9°C and -6°C;
e) blending said ground frozen trim and said brine solution together at a ratio wherein the amount of brine is at least double the amount of trim by weight and maintaining the temperature of said blend at between -9°C and -4°C.
f) mixing said trim and brine solution until a saturated solution is achieved; and
g) milling said saturated solution until a complete suspension is achieved, having a temperature of 0°C or less;
and wherein said suspension is then injected into the meat.

2. A method according to claim 1, including the step of adding a pickle solution to the brine solution prior to blending of said trim and brine solution together.

3. A method according to claim 2, in which flavour enhancing ingredients are included in said pickle solution.

4. A method according to claim 1, 2 or 3, in which said trim is frozen to -8° prior to grinding.

## Patentansprüche

1. Verfahren zum Behandeln von Fleisch, welches das Injizieren von vermahlenen Schneidabfällen der gleichen Fleischsorte in das Fleisch umfaßt: **dadurch gekennzeichnet**, daß die vermahlenen Schneidabfälle in Salzlösung suspendiert werden; die Temperatur des Fleischs 3°C bis 9°C beträgt, wenn die Suspension, die kälter als das Fleisch ist, darin injiziert wird; und die Suspension hergestellt wird durch
a) Entfernen von Schneidabfällen von Fleisch der gleichen Sorte wie dem zu behandelnden Fleisch, wobei die Schneidabfälle aus Fett und magerem Fleisch bestehen;
b) Tiefkühlen der Schneidabfälle;
c) Vermahlen der tiefgekühlten Schneidabfälle in einer Mahlvorrichtung;
d) Kühlen einer Salzlösung auf zwischen -9°C und -6°C;
e) Mischen der vermahlenen tiefgekühlten Schneidabfälle und der Salzlösung zusammen in einem Verhältnis, worin die Menge der Salzlösung mindestens das Doppelte der Menge der Schneidabfälle, bezogen auf das Gewicht, ist, und Halten der Temperatur der Mischung auf zwischen -9°C und -4°C.
f) Vermischen der Schneidabfälle und der Salzlösung, bis eine gesättigte Lösung erreicht ist; und
g) Vermahlen der gesättigten Lösung, bis eine vollständige Suspension erreicht ist, die eine Temperatur von 0°C oder weniger hat;
und worin die Suspension dann in das Fleisch injiziert wird.

2. Verfahren nach Anspruch 1, welches den Schritt der Zugabe einer Beizlösung zu der Salzlösung vor dem Vermischen der Schneidabfälle und der Salzlösung miteinander einschließt.

3. Verfahren nach Anspruch 2, in welchem geschmacksverstärkende Bestandteile in der Beizlösung eingeschlossen sind.

4. Verfahren nach Anspruch 1, 2 oder 3, in welchem die Schneidabfälle vor dem Vermahlen auf -8°C tiefgekühlt werden.

## Revendications

1. Procédé pour traiter de la viande, qui comprend l'injection dans la viande de rognures broyées du même type de viande : caractérisé en ce que les rognures broyées sont en suspension dans de la saumure ; la température de la viande est de 3° à 9°C lorsque la suspension, qui est plus froide que la viande, y est injectée ; et la suspension est préparée comme suit :
a) retirer les rognures d'une viande du même type que la viande à traiter, lesdites rognures consistant en graisse et viande maigre ;
b) congeler les rognures ;
c) broyer les rognures congelées dans un appareil de broyage ;
d) refroidir une solution de saumure entre -9°C et -6°C ;
e) mélanger ensemble lesdites rognures broyées congelées et ladite solution de saumure en un rapport tel que la quantité de saumure soit au moins double de la quantité de rognures en poids et maintenir la température de ce mélange entre -9°C et -4°C ;
f) remuer les rognures et la solution de saumure jusqu'à obtention d'une solution saturée ; et
g) broyer la solution saturée jusqu'à obtention d'une suspension complète ayant une température de 0°C ou moins ;
et dans lequel ladite suspension est ensuite injectée dans la viande.

2. Procédé selon la revendication 1, comprenant l'étape consistant à ajouter une solution d'agents de marinage à la solution de saumure avant de mélanger ensemble lesdites rognures et ladite solution de saumure.

3. Procédé selon la revendication 2, dans lequel des ingrédients exaltant l'arôme sont inclus dans ladite solution d'agents de marinage.

4. Procédé selon la revendication 1, 2 ou 3, dans lequel lesdites rognures sont congelées à -8°C avant le broyage.
